# EUROPEAN PATENT APPLICATION

(11) **EP 2 216 382 A1**
(43) Date of publication of application: **11.08.2010**
(21) Application number: 09153940.3
(22) Date of filing: 27.02.2009
(51) Int. Cl.: C09J 7/02, B32B 27/32

(54) **Masking film with improved wetting properties**

(30) Priority: 03.02.2009 US 322397
(71) Applicant: Tredegar Film Products Corporation, Richmond, VA 23225 (US)
(72) Inventor: Ballakoff, Gary Michael, Midlothian, VA 23112 (US); Austin, Richard Graham, Lake Geneva, WI 53147 (US); Desai, Bankim, Chesterfield, VA 23832 (US); Patel, Shailesh, Chesterfield, VA 23832 (US)
(74) Representative: von Kreisler Selting Werner

(57) **Abstract**

A masking film having improved wetting of substrates has an adhesion layer, a second layer, and optionally a core layer interposed between the adhesion layer and the second layer, wherein the adhesion layer comprises a blend of a metallocene polyolefin and a low density polyethylene and wherein the second layer provides increased stiffness, strength or mechanical properties to the film. The film may also include antistatic agents in at least one film layer.

## Description

### Background of the Disclosure

This application relates to a masking film for use in protecting substrates during manufacturing process, shipping, or in use. The masking films comprise at least one metallocene polyolefin resin and have improved wetting on substrates. The masking film may be applied and removed to smooth, textured or coated surfaces. The disclosure also relates to a method for producing the masking film.

Masking films, also referred to as surface protection films, typically provide temporary physical barriers to prevent damage, contamination, scratching, scuffing, or other marring of a substrate. Masking films provide such protection for surfaces during manufacture, shipping, or storing prior to use. Masking films are used in numerous applications as protective coverings for surfaces, particularly relatively smooth surfaces, such as acrylics, polycarbonates, polyesters glass, polished or painted metals and glazed ceramics. Modern optical substrates require masking films that both protect the surfaces and may be removed without damaging the surface, and without leaving residues of an adhesive or other contaminants or particulates.

Traditionally, surface protection films have comprised corona-treated films or adhesive-coated paper and film. Corona-treated films have been exposed to an electrostatic discharge to oxidize the surface of the film. This oxidation increases the film's surface tension and attraction to polar surfaces. Such corona-treated films typically are non-embossed and rely on a very narrow window of corona treatment to facilitate adhesion. The non-embossing makes the film subject to hard wrinkles and gels. The adhesion promoting effects of corona treatment also dissipate with time. Masking films are described in United States Patent Nos. 4,395,760; 5,100,709; 5,693,405; 6,040,046; 6,326,081; and 6,387,484 which are hereby incorporated by reference.

There is a need for a masking film that does not comprise an adhesive, but provides sufficient adherence to a substrate to provide suitable protection. This adhesion to the substrate should not increase significantly over time. There is further need for a masking film that does not comprise an adhesive, but provides a suitable degree of wetting of the substrate. The wetting of the substrate by the masking film allows for smooth contact at the film/ substrate interface. There may also be a need for the masking film adhesion side to have low surface resistance so as not to attract contamination due to static.

### Summary of the Disclosure

In accordance with the present invention there is provided a masking film comprising an adhesion layer, wherein the adhesion layer consists essentially of a metallocene polyolefin and a low density polyethylene and a second layer, wherein the second layer is made from a stiffer polyolefin than the adhesion layer. Additionally, the improved masking film may comprise an adhesion layer comprising a metallocene polyethylene copolymer and an ionomer resin; a core layer comprising a polymer with a higher tensile modulus than the metallocene polyethylene in the inner adhesion layer; and an outer skin layer comprising a polymer.

### Detailed Description

Throughout this invention, the singular forms "a," "an," and "the" include plural reference unless the context clearly dictates otherwise. Thus, for example, a reference to "a layer" includes a plurality of layers.

The protective film comprises an adhesion layer and a second layer. The second layer is stiffer than the adhesion layer to provide stiffness, strength and other desired properties to the film. The adhesion layer may comprise a blend of metallocene polyethylene and a low density polyethylene. The second layer may comprise low density polyethylene.

In another embodiment, the masking film consists of an adhesion layer and a second layer, wherein the adhesion layer consists essentially of a blend of metallocene polyethylene and a low density polyethylene and the second layer consists essentially of low density polyethylene.

The masking films exhibit improved wetting of substrates. Wetting is a term used to describe the affinity of a film to spontaneously make intimate contact with a substrate surface. Wetting can be a measure degree of contact between film and substrate surface and may be indicated by the percentage of area of film that is in contact with the substrate. Certain areas of the film may comprise air pockets or have impurities on the surface that prevent complete contact of the film with the substrate.

Generally speaking, better adhesion is obtained by having a greater degree of contact between the film and the substrate. It is possible to increase contact between the film and substrate by application or pressure, etc. However, for delicate or fragile substrates, the application of pressure, or other manipulation of the film to improve contact with the substrate, is not advantageous and may result in damage to the substrate. Accordingly, it is beneficial to have a film that demonstrates a high degree of wetting. The films disclosed herein are capable of wetting at least 90% of the substrate surface, and more preferably at least 95% and more preferably 100% of the substrate surface within 10 seconds of applying the film to the substrate. It is understood, however, that the wetting ability of the film is a function of the particular substrate and film aging.

Preferably, in embodiments of the masking film, one side of the film is smooth and the other side has a rough or matte surface. In use, the smooth side is applied to the surface to be protected. The rough side is also comprised of at least one layer of a thermoplastic resin. The smooth side has a surface roughness ("Ra") of from 0 to 60 microinch, or more preferably, between 0 and 30 microinch. The rough side prevents blocking and may have a surface roughness of from 25 to 600 microinch, and more preferably, from 50 to 300 microinch. The rough side can be roughened via any suitable means and in preferred embodiments may be matte embossed. Embodiments of the masking film comprising a rough side are believed to prevent the film from contacting as much surface area of itself, or any other surface, thereby preventing blocking and wrinkling of the film.

The extrusion process of matte embossing is a preferred technique for imparting a sufficient level of roughness to the second layer. It should be noted that the roughening of the surface of the second layer might be accomplished via any suitable method including, without limitation, air impingement, air jets, water jets, and combinations thereof. The rough surface prevents blocking by precluding such intimate contact between the surfaces of the masking film and another surface such that the masking film can be easily unrolled and/or peeled away from another smooth surface. This feature also prevents the wrinkling so often associated with traditional masking films. The multilayer matte-embossed film layer also may incorporate mechanical differential slip as opposed to chemical (anti-blocking agent) induced differential slip.

The protective films of the disclosure are different from coated films. Coated films comprise a substrate having an adhesive coating. An adhesive coating is a layer of an adhesive composition that lacks sufficient cohesive strength to form a film by itself and thus needs a substrate for support. In the current films, the adhesion layer is a self-supporting material that can exist independently of the other film layers. The present masking films are also different from pressure-sensitive adhesive films. Pressure sensitive adhesive films are, by definition, permanently tacky and are prone to leave residue on substrates to which they are adhered.

As used herein, the term "film" means a thin sheet or web produced by a cast extrusion or blown process. The films of this disclosure are made of polymers. The polymer may be further processed between rollers and cooled to form the web. The multilayer films can produced by extruding the different layers simultaneously in a coextrusion process or by forming each film layer separately and then bonding or laminating the individual films together. In a preferred embodiment, the multiple layers of the masking film are co-extruded using any co-extrusion process known in the art. The use of co-extrusion allows for the relatively simple and easy manufacture of a multi-layered masking film composed of distinct layers, each performing specific functions.

In some embodiments, the adhesion layer may be from 10% to 30% and the second layer may be the remaining 70% to 90% of the total film thickness. In other embodiments, the adhesion layer may comprise from 15% to 25% of the film based upon the total thickness of the masking film and the second layer comprising the remaining 75% to 85%. In a more specific embodiment, the adhesion layer is 15% to 20% of the total film thickness.

The masking film may be any desired thickness. However, in certain applications, the total thickness of the masking film is from 25 microns to 100 microns.

Embodiments of the improved masking film of the present invention comprise an adhesion layer comprising a metallocene polyolefin resin. As used herein, a "metallocene polyolefin" is a polyolefin polymer or resin produced by a metallocene-catalyzed polymerization of olefin monomers. Typically the olefin monomer is ethylene. Metallocene polyolefins also include co-polymers of olefins produced by a metallocene-catalyzed polymerization process, such as co-polymers of any combination of olefin monomers such as, but not limited to, ethylene, propylene, butene, isobutenes, pentene, methyl pentene, hexene, heptene, octene, and decene, for example, metallocene poly (ethylene-co-octene) copolymers. Blends of metallocene polyolefins may also be used, as well as blends of metallocene polyolefins with other polymers.

Metallocene polyolefins differ from polyolefins prepared by other polymerization processes, such as polyolefins produced with Ziegler-Natta catalysts. Metallocene polyolefins may be characterized by narrow molecular weight distributions of less than 2.0, controlled polymer structure, higher thermal stability, higher clarity, and higher impact resistance compared to polyolefins made by other polymerization processes. Based upon such properties, one skilled in the art may easily discern between metallocene polyolefins and polyolefins produced by other processes. Metallocene polyolefins are commercially available from Dow Chemical Corp. and other resin suppliers. One example is PL1280G resin from Dow Chemical.

Metallocene polyolefins, including metallocene copolymers, may be produced with narrow molecular weight distribution. Embodiments of the masking film include metallocene polyolefins having a molecular weight distribution (i.e., polydispersity) greater than 1.0 and less than 2.0. In certain embodiments, metallocene polyolefins having a molecular weight distribution of greater than 1.0 and less than 1.7, or a molecular weight distribution greater than 1.0 and less than 1.5 may be used to advantage. The metallocene polymers and copolymers used in the masking films may be random, block, graft or star polymers.

In certain embodiments, the protective film comprises a metallocene polyolefin having a density between 0.85 g/cc and 0.95 g/cc. In further embodiments, the metallocene polyolefin may have a density between 0.86 and 0.92, such as a metallocene polyethylene having a density between 0.86 g/cc and 0.92 g/cc.

Embodiments of the masking films of the present invention do not comprise a tackifier. In embodiments of the masking film, the adhesion layer of the films may exhibit a peel strength, relative to the substrate being masked, of less than 10gf/25mm, and in some applications the peel strength of greater than 5gf/25mm and less than 10gf/25mm.

Without affecting the basic and novel characteristics of the disclosure, any layer of the masking films of the present disclosure may comprise at least one anti-oxidant, colorant, pigment, clarifier, and/or nucleating agent.

Secondary polymers such as polyolefins (homopolymers or co-polymers), polyvinyl alcohol, polyvinyl chloride, nylon, polyesters, styrenes, butylenes, polymethylpentene and poly-oximethylene, and mixtures thereof, can be blended with the primary polymer (metallocene polyolefins, metallocene polyethylene) at varying ratios to provide the desired level of adhesion of the film. Acid-modified co-polymers, anhydride-modified co-polymers and acid/acrylate-modified co-polymers also are useful.

In one embodiment, the adhesion layer comprises a polymer blend consists essentially of 75% to 85% by weight of a metallocene poly(ethylene-co-octene) copolymer and 15% to 25% by weight of a low density polyethylene. This embodiment of the disclosure has specific properties that allow rapid and sufficient wetting of low surface energy substrates such as, but not limited to a substrates comprising cyclic olefin polymers ("COP") films, triacetyl cellulose ("TAC") films, polyester, polycarbonate, or other substrates used as films used for retardation or polarization in the manufacture of liquid crystal displays ("LCDs") and other electronic displays.

In certain applications, the metallocene poly(ethylene-co-octene) copolymer may be replaced with a metallocene plastomer or other metallocene polyolefin. TAC films are typically used as polarizer protective layers in the manufacture of LCD's. TAC polymers formed with the low stresses of solvent casting result in a unique polymer system that meets the requirements of extremely isotropic LCD coversheets. However, the TAC film is a soft film and when produced and rolled, the smooth front and back film surfaces have a tendency to stick or block together and generate poor wound roll quality. This may lead to defects in the LCD assembly. The masking film wets TAC films better than other combinations of constituents and structures of masking films. Thus, TAC films, when masked with films of this disclosure may be used more successfully and efficiently for LCD assemblies.

The masking films also have desirable aging properties. Time, temperature, and humidity affect the adhesion properties of prior art masking films, resulting in an increase in adhesion. Thus, the prior art films prove hard to remove after a period of time, which may result in damage to the surface of the substrate that the film is supposed to protect. The present masking films do not show any appreciable increase in adhesion to the substrate as a function of time, temperature or humidity.

A masking film that resists buildup of an electrostatic charge is desirable in many applications. In certain applications, the masking film protects portions of the film not only from mechanical damage and chemical damage or contamination, but also from contamination from particulates, such as dust. Therefore, it is desired in certain applications, such as layered optical screens, that the masking films themselves do not transfer dust or other particles to the surface of the substrate. In order to improve the antistatic properties of the masking film, an anti-static agent may be added to the adhesion layer. Preferably, the adhesion layer or outer layer will include an antistatic agent that will not migrate to the surface of the film and, thus having the potential of contaminating the surface of the substrate, such as an ionomer. An ionomer is a polymer having unique physical properties due to ionic interactions of discrete regions of the polymer components. Most ionomers are polymers in which a small but significant proportion of the constituent monomers have ionic groups. In certain embodiments, the ionomer may be a resin such as ethylene methacrylic acid copolymer. Specific ionomer resins include ESX112 or ESX113 available from E.I. du Pont de Nemours and Co.

It also is contemplated that at least one core layer can be interposed between the thermoplastic adhesion layer and the second layer. This core layer can aid in providing the desired opacity and/or color, stiffness and toughness to the multilayer masking film. The core layer used pursuant to this disclosure can be any of a wide variety of thermoplastic polymeric or elastomeric materials such as polyethylene, polypropylene, polyvinyl chloride, nylon, polyester, cyclic olefin polymers, and the like.

If one or more core layers are employed, the adhesion layer should nevertheless comprise 10-30% of the total film thickness, with the remaining 70-90% comprising the remaining layers. In one embodiment, the adhesion layer comprises 10-30%, the core layer(s) comprise 60-80% and the outer layer comprises 10-30% of the total film thickness.

The core layer may improve the mechanical properties of the film, such as stiffness, modulus, tear resistance, etc. For example, the core layer may be formulated to reduce the potential damage of the smooth surface of the adhesion layer during manufacturing and use of the film, or to improve the film's modulus. In certain embodiments, the masking film should have a modulus of greater than 15,000 psi. In certain embodiments, the modulus of the masking film may be greater than 15,000 psi and less than 350,000 psi. In certain embodiments, the masking layer should have a modulus of 240,000 psi (± 15%). The modulus in this range is desired to provide protection to the adhesion layer without affecting the wetting characteristics of the masking film.

The core layer may comprise any appropriate polymer. For example, the core layer or a component of the adhesion layer or skin layer, may be at least one polymer selected from polyethylene, low density polyethylene, linear low density polyethylene, high density polyethylene, medium density polyethylene, polypropylene, random copolymer polypropylene, polypropylene impact copolymers, metallocene linear low density polyethylene, plastomers, poly (ethylene-co-vinyl acetate), poly (ethylene-co-acrylic acid), poly (ethylene-co-methyl acrylate), cyclic olefin polymers, polyamides, or poly (ethylene-co-n-butyl acrylate).

The outer skin layer of the three-layer film embodiment provides a surface for ease of release and antiblocking, antistatic properties, and a clear and printable surface. In some embodiments, the outer skin layer consists essentially of polyethylene and an antistatic agent, such as an ionomer salt.

A specific embodiment of a masking film comprises an adhesion layer, a core layer, and an outer layer. In one embodiment, the adhesion layer consists essentially of a metallocene polyolefin and from 10 wt% to 40 wt% of an ionomer such as ethylene methacrylic acid copolymer. The masking film provides anti-static protection, improved wetting, adhesion, and sustains stable adhesion power upon aging. In embodiments of the invention, the ionomer or surfactant may be immiscible in the other components of the layer.

### Examples

Films prepared in accordance with the disclosure were prepared and compared against commercially available masking films in terms of wetting ability against various substrates and in physical properties. In addition, such films were also evaluated for peel strength as a function of aging.

The film in Example 1 is a co-extruded 2-layer film. The first layer contained a blend of 35 wt % of low density polyethylene and 65 wt. % of metallocene polyethylene. The second layer contained a blend of 15 wt% high density polyethylene and 85 wt. % of low density polyethylene.

The film of Example 2 is a co-extruded 3-layer film. The first layer contained 10 wt % of low density polyethylene, 65 wt. % of metallocene polyethylene and 25 wt % of ethyle-nemethacrylic acid copolymer ionomer. The middle layer was layer of cylic olefin copolymer. The third layer was a layer of low density polyethylene.

The film used as the control was ForceField™ 1035, a monolayer masking film commercially available from Tredegar Film Products Corporation, Richmond, VA.

The films were applied to various substrates to compare the ability of the films to wet the substrate. The results are reported in Table 1.

**Table 1 - Wetting Test**

| | **Polycarbonate** | **Polyester** | **Acrylic** |
|---|---|---|---|
| **Control** | Good | Good | Poor |
| **Example 1** | Excellent | Excellent | Good |

The physical properties of the films were also compared. Results are reported in Table 2. The data in Table 2 shows that the improved wetting had no negative impact on other film properties. The peel test data reported in Table 2 was determined by adhering the film to a polycarbonate substrate and then measuring the force needed to remove the film after 60 minutes at 23°C.

**Table 2 - Physical Properties**

| | **Control** | **Example 1** |
|---|---|---|
| Thickness (µm) | 28.4 | 50.0 |
| MD Tensile (psa) | 19.6 | 17.9 |
| TD Tensile (psa) | 14.7 | 16.5 |
| MD Elongation (%) | 330.0 | 480.0 |
| TD Elongation (%) | 500.0 | 600.0 |
| MD Shrink (%) | 1.6 | 0.8 |
| 180° peel (g/25mm) | 2.8 | 3.3 |

To demonstrate the aging characteristics of the films, the film of Example 2 was adhered to a polycarbonate substrate and stored at 23°C. The force needed to remove the film as a function of time was then measured. Results are reported in Table 3. The results show that the adhesion level of the film increased only about 12% in 48 hrs.

**Table 3 - Aging Adhesion**

| **Time (hrs)** | **Peel Force (g/25 mm)** |
|---|---|
| 0 | 4.0 |
| 24 | 4.0 |
| 48 | 4.5 |

Many other variations, modifications, and alternate embodiments may be made in the article and techniques described, by those skilled in the art, without departing from the concept of the present disclosure. Accordingly, it should be clearly understood that the article and methods referred to in the foregoing description and following examples are illustrative only and are not intended as limitations on the scope of this disclosure.

The invention has been described with reference to particularly preferred embodiments and examples. Those skilled in the art will appreciate, however, that various modifications may be made to the invention without significantly departing from the spirit and scope thereof.

## Claims

1. A film comprising an adhesion layer and a second layer, the adhesion layer comprising a blend of a metallocene polyolefin and a low density polyethylene.

2. The film of claim1 wherein the second layer provides increased strength, stiffness or mechanical properties to the film.

3. The film of claim 1 wherein the metallocene polyolefin
(i) is selected from the group of polymers comprising metallocene polyethylenes, metallocene polypropylenes, and metallocene copolymers comprising monomer units derived from ethylene and at least one monomer selected from a group comprising propylene, butene, pentene, hexene, and octane, preferably is a metallocene polyethylene; and/or
(ii) has a molecular weight distribution greater than 1.0 and less than 2.0; and/or
(iii) has a density between 0.85 g/cc and 0.95 g/cc.

4. The film of claim 1 wherein the masking film does not comprise an adhesive coating.

5. The film of claim 1 wherein the adhesion layer further comprises an ionomer, preferably the ionomer is selected from ethylene methacrylic acid and potassium ionomers.

6. The film of claim 1 wherein the adhesion layer
(i) does not comprise a tackifier; and/or
(ii) comprises 10% to 30% of the total thickness of the masking film.

7. The film of claim 1 wherein the second layer comprises at least one polymer selected from polyethylene, low density polyethylene, linear low density polyethylene, high density polyethylene, metallocene polypropylene, metallocene high density polyethylene, medium density polyethylene, metallocene linear low density polyethylene, plastomers, cyclic olefin polymers, and polyamides.

8. The film of claim 1 further comprising at least one additive selected from anti-oxidant, colorant, pigment, clarifier, or nucleating agent.

9. The film of claim 1 wherein the film achieves greater than 90% surface wetting wetting within 10 seconds of being applied to a substrate.

10. The film of claim 1 further comprising a core layer positioned between and bonded to the adhesion layer and the second layer.

11. The film of claim 10 wherein the core layer comprises a cyclic olefin polymer with a greater tensile strength than the metallocene polyethylene in the inner adhesion layer.

12. The film of claim 11 wherein the core layer or the second layer comprise at least one polymer selected from polyethylene, low density polyethylene, linear low density polyethylene, high density polyethylene, metallocene polypropylene, metallocene high density polyethylene, medium density polyethylene, polypropylene, random polypropylene copolymers, polypropylene impact copolymer, metallocene linear low density polyethylene, plastomers, poly(ethylene-co-vinyl acetate), poly(ethylene-co-acrylic acid), poly(ethylene-co-methyl acrylate), cyclic olefin polymers, polyamides, or poly(ethylene-co-n-butyl acrylate).

13. The film of claim 12 further comprising an antistatic agent in at least one layer of said film.

14. The film of claim 10 wherein in the second layer comprises release agents.

15. The film of claim 10 wherein the adhesion layer is 10% to 30% of the total thickness of the film, the core layer is 40% to 80% of the total thickness of the film, and the second layer is form 10% to 30% of the total thickness of the film.
